(19) Europäisches Patentamt
European Patent Office
Office européen des brevets

(11) **EP 2 580 442 B1**

(12) **EUROPEAN PATENT SPECIFICATION**

(45) Date of publication and mention of the grant of the patent:
**17.07.2019 Bulletin 2019/29**

(21) Application number: **11792827.5**

(22) Date of filing: **21.04.2011**

(51) Int Cl.:
*F02B 33/00* *(2006.01)*    *F02D 23/00* *(2006.01)*
*F02D 29/06* *(2006.01)*    *F02D 9/02* *(2006.01)*
*F02D 41/00* *(2006.01)*

(86) International application number:
**PCT/US2011/033413**

(87) International publication number:
**WO 2011/156057 (15.12.2011 Gazette 2011/50)**

(54) **THROTTLE-LOSS RECOVERING TURBINE GENERATOR SYSTEMS FOR SPARK-IGNITION ENGINES**

TURBINENGENERATORSYSTEME MIT DROSSELLOSER ENERGIERÜCKGEWINNUNG FÜR OTTOMOTOREN

SYSTÈMES DE GÉNÉRATEUR DE TURBINE SERVANT À RÉCUPÉRER LES PERTES D'ÉNERGIE DUES AU PAPILLON DES GAZ ET DESTINÉS À DES MOTEURS À ÉTINCELLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.06.2010 US 353403 P**

(43) Date of publication of application:
**17.04.2013 Bulletin 2013/16**

(73) Proprietor: **Garrett Transportation I Inc.**
**Torrance, CA 90504 (US)**

(72) Inventors:
• **BERESEWICZ, Patrick, A.**
**La Mirada, CA 90638 (US)**
• **GUIDRY, Mike**
**Redondo Beach, CA 90277 (US)**
• **NAGARAJAN, Karthik, S.**
**Morristown, NJ 07962-2245 (US)**

(74) Representative: **LKGLOBAL**
**Lorenz & Kopf PartG mbB Patentanwälte**
**Brienner Straße 11**
**80333 München (DE)**

(56) References cited:
EP-A1- 1 462 629     EP-A1- 2 083 154
WO-A1-96/04487     JP-A- 5 332 158
JP-A- 2004 308 646     JP-A- 2006 105 075
US-A- 5 394 848     US-A1- 2005 150 210
US-A1- 2008 031 750

**Description**

BACKGROUND OF THE INVENTION

This application relates generally to spark-ignition (SI) engines, and more particularly relates to systems for recovering energy that would otherwise be lost in a conventional throttle in the air intake system and for converting that recovered energy to electrical power that can be usefully employed for other purposes.

On SI engines, control of engine torque output has historically been accomplished by "throttling" the intake air charge entering the engine cylinders by using a throttling valve. When set at a partially closed position to reduce engine torque to some less-than-maximum level, the throttle expands the air passing through it to reduce the intake air density entering the cylinders. To maintain the engine air/fuel ratio within the desired range, the fueling rate is reduced by the engine controller to match the reduction in air density, and engine torque output is thus reduced to the desired level.

When a throttle is nearly fully open at high loads, it poses little or no restriction to the intake air flow. However, when operating with a partially closed throttle, the SI engine suffers from a significant efficiency loss that can be directly linked to the use of a throttle to control the engine torque output. A partially closed throttle executes the desired air flow density reduction for torque control via a pressure reduction to the flow. With a partially closed throttle, the low-pressure intake air charge acts on the piston area during the intake stroke to create what is known as an intake pumping loss, which is largely responsible for the drop in the SI engine's efficiency rating at part-throttle. In simple terms, the intake pumping loss is roughly equivalent to the amount of energy the engine needs to expend to pull the intake air through the throttle. A standard throttle has no mechanism to extract the energy from the change in enthalpy of the flow passing through it, so none of this energy is recovered.

Another source of power train inefficiency is accessory drive parasitic losses. Alternators, power steering pumps, fuel pumps, oil pumps, water pumps, air conditioning compressors, and the like, have traditionally all been contributors toward parasitic losses in that they directly pulled power from the engine crankshaft via an accessory drive belt or gear train to perform their intended function (pump, pressurize, circulate, generate, etc.). In recent years, more pointed efforts have been made to improve the efficiency of these devices, and some, such as water pumps, fuel pumps, oil pumps, and power steering pumps, have also started to be converted to electric drive in an attempt to improve their under-hood packaging as well as reduce the net power they demand from the crankshaft over their operating duty cycle. The result of this trend to transition these accessory devices to electric drive is that the power demands on the vehicle electrical system and alternator, which has already been steadily increasing for safety, comfort and "infotainment" needs, is increasing even further. The alternator, which is typically responsible for maintaining an adequate state of charge on the vehicle's battery under these additional electrical loads, continues to draw its power from the engine's crankshaft. Unfortunately, the typical production alternator today still suffers from a rather low efficiency level of 50-65% even with implementation of various efficiency improvements, meaning that the crankshaft must supply the alternator's rotor mechanical power which is 1.5 to 2.0 times what the alternator needs to output electrically.

With respect to traditional SI engine design, it would be highly beneficial from the standpoint of part-throttle efficiency improvement to be able to incorporate a device or system that would be able to capture the wasted energy from the change in enthalpy of the air flow that passes through the throttle, and using that energy to perform useful work. Of added benefit would be a system that did so by electrical means, thus simultaneously helping fill the modern vehicle's ever-increasing need for electrical power.

Over the years, numerous throttle loss recovering systems of various types and executions have been proposed for SI engines. One system of particular interest is a throttle loss recovering turbine generator system. This system uses a turbine to perform the part-load intake air expansion process while simultaneously extracting energy from that same flow. The turbine is made to drive a generator, creating electrical power that is merged into the vehicle's electrical system to supplement or displace electrical power supplied by the alternator. Displacing electrical power supplied by the inherently inefficient alternator results in a multiplying effect on the power put back into the crankshaft, and thus a commensurately larger engine efficiency improvement may be obtained. US5394848 discloses a throttle loss recovery system using a free-floating (fix-geometry) turbine coupled to a generator, a by-pass with a by-pass valve, and a throttle valve positioned upstream of the turbine in series. EP1462629A1 discloses a throttle loss recovery system using a compressor coupled to a generator, a by-pass with a by-pass valve, and a throttle valve positioned downstream of the compressor in series. EP2083154A1 discloses a throttle loss recovery system using a VNT turbine coupled to a generator and a throttle valve in series with the turbine. WO96/04487A1 discloses a throttle loss recovery system using a VNT turbine coupled to a generator, a by-pass with a by-pass valve, and no throttle valve.

BRIEF SUMMARY OF THE DISCLOSURE

The present disclosure describes various throttle loss recovery (TLR) systems for SI engines. TLR systems employing a variable nozzle turbine (VNT) as well as systems employing a free-floating (non-variable) turbine are described. Systems having both low-leakage VNTs as well as high-leakage VNTs are described. The TLR systems include a bypass passage and associated bypass valve for allowing air to bypass the turbine under certain operating conditions, and the amount of air bypassed around the turbine can be varied by controlling the bypass valve. In some embodiments described herein, there is also a series throttle valve arranged either upstream or downstream of the turbine.

A TLR system in accordance with one embodiment described herein comprises:

an electrical generator;
a radial-inflow turbine coupled to the generator and arranged to receive incoming air destined for an intake of a spark-ignition engine, the turbine recovering energy from the air passing therethrough and the turbine in turn rotatably driving the generator, wherein the turbine comprises a high-leakage variable nozzle turbine (VNT) that is controllable between a fully closed position and a fully open position and partially open positions therebetween;
a bypass passage and an associated bypass valve arranged to allow air to bypass the VNT and be delivered directly to the air intake, the bypass valve being controllable to selectively vary a degree of opening of the bypass valve from closed to open and partially open positions therebetween; and
a throttle valve arranged upstream of and in series with the VNT and the bypass valve, the throttle valve being controllable to selectively vary a degree of opening of the throttle valve from closed to open and partially open positions therebetween.

The TLR system further comprises a rectifier, a filter, and a pulse width modulation (PWM) controller between the generator and a load served by the generator such that AC electrical power generated by the generator is rectified and filtered into DC current and is supplied to the load via the PWM controller.

In one embodiment of a TLR system employing a high-leakage VNT, the series throttle valve is arranged downstream rather than upstream of the VNT and bypass valve.

In other embodiments of the TLR system, the turbine comprises a low-leakage VNT. With such a low-leakage VNT, the flow rate through the VNT at the fully closed position is less than a required engine idle airflow rate, and therefore the series throttle valve is not essential and can be omitted if desired.

In still other embodiments described herein, the TLR system employs a free-floating (i.e., non-variable) radial-inflow turbine. A series throttle valve is included either upstream or downstream of the turbine and bypass valve.

BRIEF DESCRIPTION OF THE SEVERAL VIEWS OF THE DRAWING(S)

Having thus described the present disclosure in general terms, reference will now be made to the accompanying drawings, which are not necessarily drawn to scale, and wherein:

FIG. 1 depicts a throttle-loss recovery system and associated SI engine to which load control methods in accordance with the invention are applicable;

FIG. 2 depicts another throttle-loss recovery system and associated SI engine to which load control methods in accordance with the invention are applicable;

FIG. 3 depicts a further throttle-loss recovery system and associated SI engine to which load control methods in accordance with the invention are applicable;

FIG. 4 depicts yet another throttle-loss recovery system and associated SI engine to which load control methods in accordance with the invention are applicable;

FIG. 5 depicts a still further throttle-loss recovery system and associated SI engine to which load control methods in accordance with the invention are applicable;

FIG. 6 depicts a load control algorithm in accordance with one embodiment of the invention, for controlling the generator load under various engine operating conditions;

FIG. 7 illustrates an exemplary load demand scenario for an engine/TLR system in accordance with the invention;

FIG. 8 illustrates the state of the TLR system having a high-leakage VNT when the TLR system is deactivated, in accordance with the invention;

FIG. 9 illustrates the state of the TLR system having a low-leakage VNT when the TLR system is deactivated, in accordance with the invention;

FIG. 10 illustrates the state of the TLR system having free-floating turbine when the TLR system is deactivated, in accordance with the invention;

FIG. 11 is similar to FIG. 7 and illustrates the state of the TLR system at various engine operating conditions corresponding to various times 1, 2, 3, 4, and 7 during the exemplary load demand scenario, for a TLR system having a high-leakage VNT in accordance with the invention;

FIG. 12 is similar to FIG. 11 but applies to a TLR system having a low-leakage VNT in accordance with the invention;

FIG. 13 is similar to FIG. 11 but applies to a TLR system having a free-floating turbine in accordance with the invention;

FIG. 14 illustrates a valve control algorithm that can be implemented specifically for positive-going (increasing load) engine airflow transitions that may provide improved throttle response in off-idle through mid-load operating modes, in accordance with the invention; and

FIG. 15 depicts an optional air valve-related generator overspeed control algorithm that may be chosen to be executed during certain high-flow rapid throttle-lift conditions in accordance with the invention.

DETAILED DESCRIPTION OF THE DRAWINGS

The present invention now will be described more fully hereinafter with reference to the accompanying drawings in which some but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

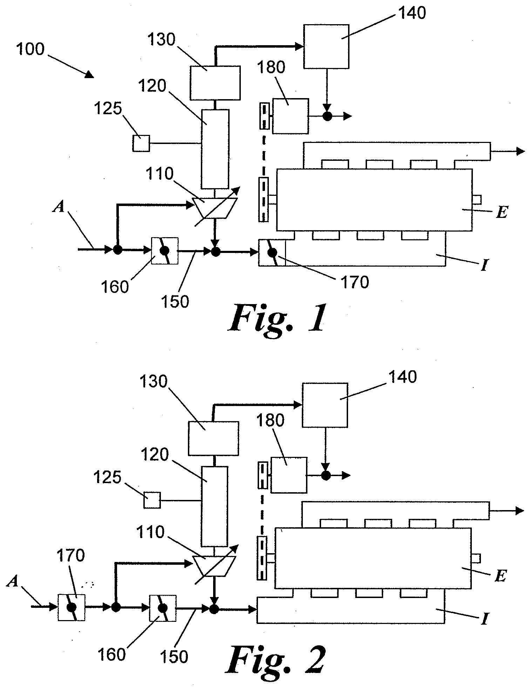

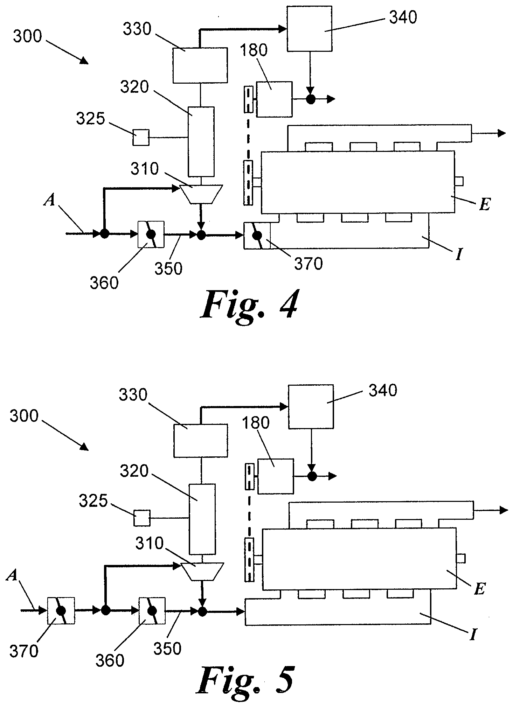

Two general configurations or classifications of turbine generator throttle loss recovery (TLR) systems are described in this disclosure. Both of these general configurations have a turbine and a bypass valve, but to drive the generator one configuration (FIGS. 1 through 3) has a variable nozzle turbine (VNT) while the other (FIGS. 4 and 5) has a free-floating (i.e., fixed-geometry) turbine. Within each of these two general configurations, those that incorporate throttle valves are furthermore classified into those that have the throttle valve located "upstream" and those that have the throttle valve located "downstream" of the turbine and bypass valve. This disclosure describes methods used to control all of these various configurations. It describes both the control methodology used to govern the air flow passing through the various valves of the system, as well as generator electrical load control methods that regulate the level of electric power production and also act as a generator overspeed control.

The embodiment shown in FIG. 1, which employs a VNT with a downstream series throttle valve, has been prototyped on a demonstrator vehicle and has been found to provide good electrical power extraction while maintaining normal vehicle driveability. Peak engine horsepower production was unaffected. Icing of the down-stream throttle has not been an issue.

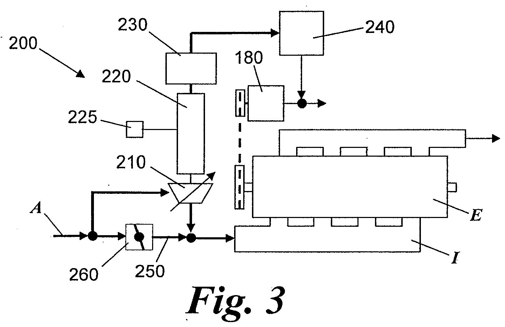

Within the general classification of TLR systems employing a VNT, the present disclosure further classifies such systems into those that have a "low-leakage VNT" and those that have a "high-leakage VNT." A "low-leakage VNT" is one that has a sufficiently low air leakage rate through the VNT mechanism when fully closed such that the VNT is able to control engine idle speed without the use of a throttle valve placed in series with the turbine, so the throttle valve may be eliminated in these system configurations (see, e.g., FIG. 3) if desired. Therefore, in the interest of simplification and brevity, the present disclosure illustrates TLR systems having low-leakage VNT turbines with no series throttle valve, but it should be understood that inclusion of a series throttle valve is an option in these systems.

A "high-leakage VNT" is one whose air leakage rate when fully closed is too great for adequate engine idle control (e.g., FIGS. 1 and 2). For systems having a high-leakage VNT, as well as configurations having a free-floating turbine (FIGS. 4 and 5) that does not control air flow rate, a throttle valve placed in series with the turbine, either upstream or downstream thereof, is necessary for idle control.

As illustrated in FIG. 1, an internal combustion engine *E* is shown with an associated TLR system **100.** The TLR system **100** includes a high-leakage VNT turbine **110** coupled to an electrical generator **120** such that the turbine drives the generator to rotate to produce electrical power under certain engine operating conditions as further described below. AC electrical power generated by the generator **120** is fed to a rectifier/filter **130** that rectifies the AC current to produce DC current and filters the current and supplies it to a pulse width modulated (PWM) controller **140.** The operation of the PWM controller is further described below. A speed detector **125** associated with the rectifier/filter and PWM controller senses the rotational speed $\omega$ of the generator **120.** The PWM controller **140** includes an associated over-voltage controller for preventing excessive voltage from being supplied to the load(s) served by the generator **120.** Although FIG. 1 illustrates the speed detector **125,** the rectifier/filter **130,** and the PWM and over-voltage controller **140** as separate items, some or all of these components can be housed in a common housing or box if desired.

The TLR system **100** further includes a bypass passage **150** arranged for bypassing the VNT **110.** A bypass valve **160** is disposed in or associated with the bypass passage **150** and is controllable between closed, open, and partially open positions so as to regulate flow through the bypass passage **150.** When the bypass valve **160** is closed, all incoming air (represented by arrow *A*) must pass through the VNT **110.** When the bypass valve **160** is partially open or fully open, some of the incoming air bypasses the VNT via the bypass passage **150** and bypass valve **160.** The system also includes a throttle valve **170** placed downstream of and in series with the VNT **110** for regulating air flow into the intake *I* of the engine *E.* The throttle valve **170** is located downstream of the juncture between the bypass passage **150** and the discharge of the VNT **110.**

The system **100** illustrated in FIG. 2 is generally similar to that of FIG. 1, except that the throttle valve **170** is placed upstream of the VNT.

FIG. 3 depicts a TLR system **200** that is generally similar to that of FIGS. 1 and 2, except that instead of employing a high-leakage VNT, the system **200** employs a low-leakage VNT **210.** As a consequence, a series throttle valve is not essential and thus has been omitted. In other respects, the system **200** is substantially like the previously described systems **100.** Thus, the system includes a generator **220,** a speed detector **225,** a rectifier/filter **230,** a PWM and over-voltage controller **240,** and a bypass passage **250** and associated bypass valve **260.** Operation of these components is similar to that of their counterparts in the previously described systems.

FIGS. 4 and 5 depict a TLR system **300** that employs a free-floating turbine (FFT) **310** instead of a VNT. In other respects, the system configuration in FIG. 4 is the same as that in FIG. 1, and the configuration in FIG. 5 is the same as that in FIG. 2. Thus, the system **300** includes generator **320,** a speed detector **325,** a rectifier/filter **330,** a PWM and over-voltage controller **340,** a bypass passage **350** and associated bypass valve **360,** and a series throttle valve **370.** Operation of these components is similar to that of their counterparts in the previously described systems of FIGS. 1 and 2. As noted, the throttle valve **370** is essential in the system **300** because the free-floating turbine has a fixed geometry and thus cannot regulate airflow.

In the systems of FIGS. 1 through 5, the load served by the generator **120, 220, 320** (and associated rectifier/filter and PWM controller) includes an alternator **180.** However, as noted further herein, in other embodiments the generator can serve additional and/or different loads, and in some applications the alternator can be omitted altogether.

Load Control Algorithm

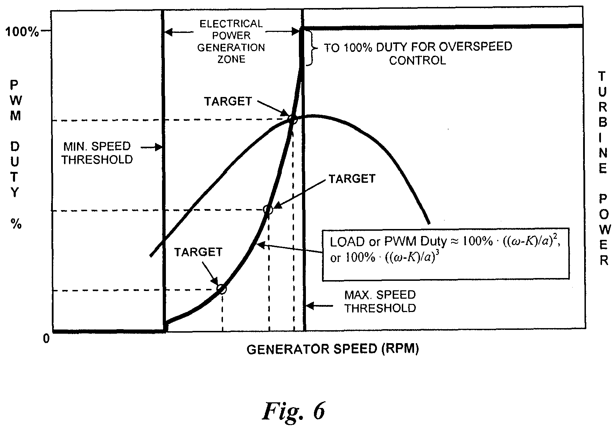

With reference to FIG. 6, a load control algorithm for electrical power production by the generator is illustrated, in accordance with one embodiment of the invention. The algorithm is based on applying a non-linear (e.g., a second- or third-order exponential) electrical load (PWM duty cycle) with respect to generator speed, tailored for the engine-TLR system characteristics such that one or more selected power generation targets are achieved within the electrical power generation zone. The electrical power generation zone is bounded on the low side by a minimum generator speed threshold $\omega_{min}$ below which the PWM duty cycle is zero. Zero PWM duty cycle at low speeds helps the turbine-driven generator quickly speed up on off-idle engine accelerations so that the turbine can be more efficient at extracting power from the air flow before applying any generator loading that would tend to slow it down. On the high side, the electrical power generation zone is bounded by a maximum generator speed threshold $\omega_{max}$ above which the PWM duty cycle is set to 100% to control generator overspeed excursions. Most generator speed control is achieved simply by the inherent steepness of the second- or third-order exponential electrical load applied by the load control algorithm within the electrical power generation zone, as compared to the available turbine shaft power.

Within the electrical power generation zone, the PWM % duty cycle, $F$, can be governed by an equation of the general form:

$$F \approx 100\% \cdot ((\omega\text{-}K)/a)^2,$$

or

$$F \approx 100\% \cdot ((\omega\text{-}K)/a)^3,$$

where $K$ and $a$ are non-zero constants that are selected based on the needs of a particular application. More generally, $F$ can be proportional to $(\omega\text{-}K/a)^n$ where $n$ is a number greater than 1.

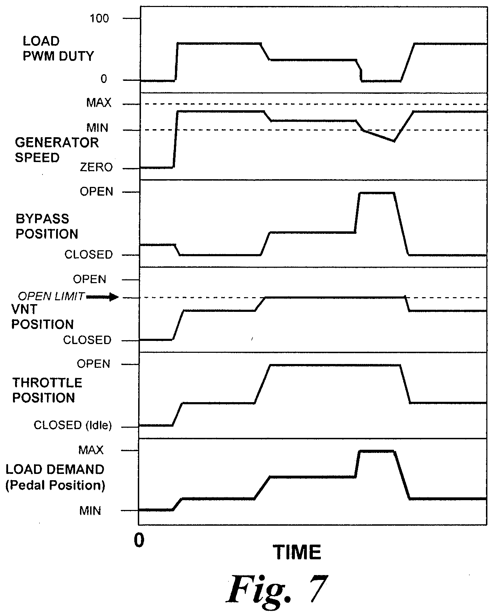

FIG. 7 illustrates an exemplary load demand scenario that will be used to aid the explanation of many of the TLR system valve and load control algorithms to be discussed below. As indicated by the Load Demand at the bottom of the diagram, beginning at Time = 0, the engine is shown idling, followed by an off-idle transition to a low-load pedal position typical of highway cruise, followed by another transition to a mid-load setting, followed by another transition to the full-load setting (known as Wide Open Throttle, or WOT), followed by a deceleration transition back to the low-load pedal position typical for highway cruise. The corresponding positions for the throttle, VNT, and bypass valves, as well as generator speed and the PWM duty, are shown in solid lines.

VNT Open Vane Angle Limit

As indicated in FIG. 7, the TLR systems using a VNT turbine that execute air flow control through regulation of the vane angles of the VNT nozzle mechanism may have the maximum flow vane angle limited to a less-than-fully-open value in order to prevent a turbine efficiency drop-off related to vane angularity.

TLR System Deactivated

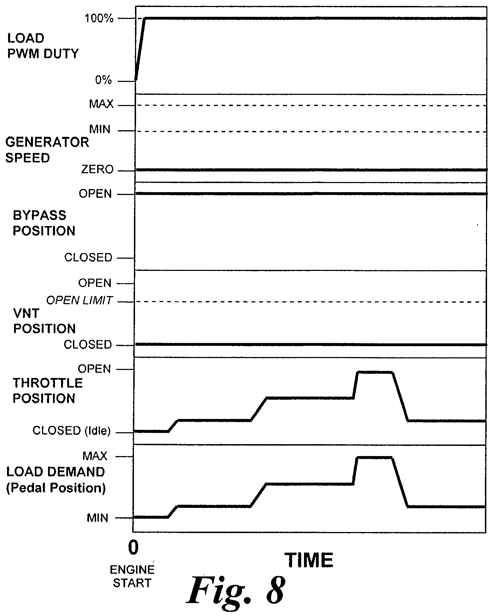

There are times when it is desired to deactivate the TLR system. With reference to FIGS. 1, 2, and 8, when the system includes a high-leakage VNT (such as in FIGS. 1 and 2), the VNT **110** is fully closed when the TLR system **100** is deactivated. It is advantageous to set the PWM duty to maximum (100%) to act as a brake on the generator **120.** The bypass valve **160** is opened sufficiently so as not to have a significant pressure drop across it. Engine air flow control for all operating conditions is handled by the series throttle valve **170.** The bottom Load Demand line in FIG. 8 shows the pedal position and the other lines show the corresponding positions of the throttle valve, VNT, and bypass valve, as well as the generator speed and PWM duty.

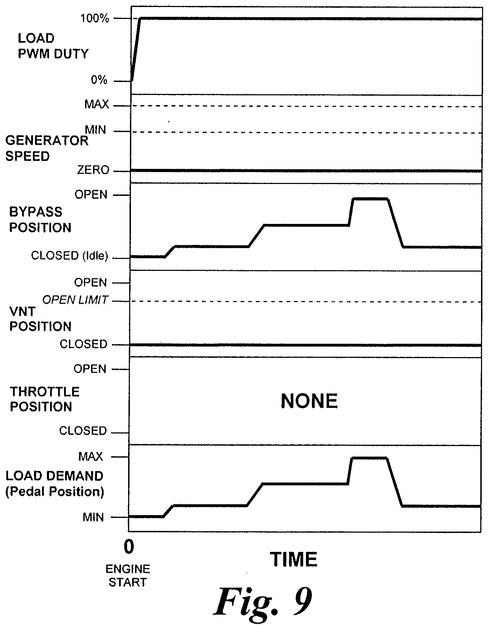

With reference to FIGS. 3 and 9, when the TLR system employs a low-leakage VNT (such as in FIG. 3), when the TLR system is deactivated the VNT **210** is fully closed. Load control PWM duty is set to maximum (100%) to act as a brake on the generator **220**. Engine air flow control for all operating conditions is handled by the by-pass valve **260**. The bottom Load Demand line in FIG. 9 shows the pedal position and the others lines show the corresponding positions of the throttle valve, VNT, and bypass valve, as well as the generator speed and PWM duty.

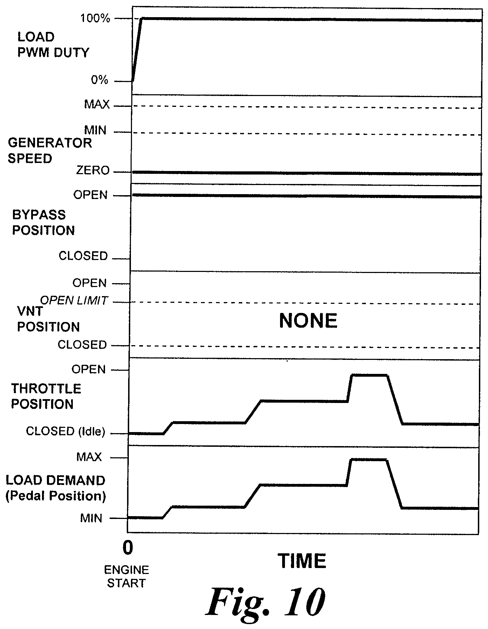

With reference to FIGS. 4, 5, and 10, when the TLR system employs a free-floating turbine (such as in FIGS. 4 and 5) and the TLR system is deactivated, the load control PWM duty is set to maximum (100%) to act as a brake on the generator **320,** and the bypass valve **360** is opened sufficiently so as not to have a significant pressure drop across it. Engine air flow control for all operating conditions is handled by the series throttle valve **370**. The bottom Load Demand line in FIG. 10 shows the pedal position and the other lines show the corresponding positions of the throttle valve and bypass valve, as well as the generator speed and PWM duty.

TLR System Activated: High-Leakage VNT

The following is a summary of the valve and load control methodology used when the TLR system is active and uses a VNT mechanism with a closed air leakage rate that exceeds what is necessary to adequately control engine idle speed.

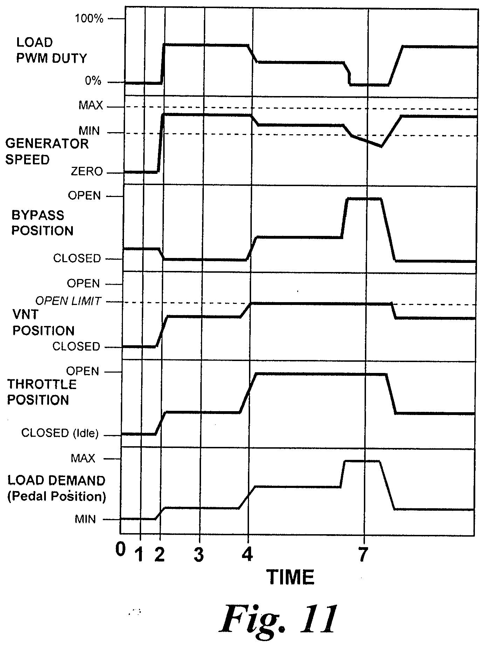

With reference to FIG. 11, the state of the TLR system at an engine idle condition (TIME = 1) is shown for a system such as shown in FIGS. 1 and 2. The VNT **110** is fully closed. Idle speed control is accomplished by closing the series throttle valve **170** to achieve the required idle air flow setting. To achieve a good idle characteristic, the bypass valve **160** is partially opened to apply either near atmospheric pressure in front of the throttle on systems with a downstream series throttle (FIG. 1), or close to the intake manifold vacuum behind the throttle on systems with an upstream series throttle (FIG. 2). The load control PWM duty is zero if generator speed is below the minimum speed threshold $\omega_{min}$ for electrical power production.

With further reference to FIG. 11, the state of the TLR system at an off-idle transition (TIME = 2) is shown for the high-leakage VNT system. Starting from the fully closed position, the VNT is moved partway toward the fully open position and simultaneously the bypass valve is moved from an initial partially open position toward the closed position. The VNT and bypass valve are moved at rates such that net air flow through both increases to meet the engine air flow demand. The series throttle valve is simultaneously opened at a higher rate than net airflow so as not to create a significant pressure drop across it. The load control PWM duty is zero until the minimum generator speed threshold $\omega_{min}$ for electrical power production is exceeded, then the PWM duty is increased exponentially with respect to increasing generator speed in such a manner that one or more power generation targets within the electrical power generation zone are achieved. The steepness of the exponential PWM duty curve acts as the primary generator overspeed control. When the generator speed exceeds the maximum generator speed threshold $\omega_{max}$ the PWM duty is set to 100% as a secondary overspeed control.

At TIME = 3 in FIG. 11, a low load cruise with a high-leakage VNT system is shown. The VNT position is adjusted so air flow through it meets engine air flow demand. The bypass valve is closed. The series throttle valve is opened sufficiently so as not to create a significant pressure drop across it. The load control PWM duty is adjusted exponentially to achieve tailored power generation targets with respect to generator speed. The steepness of the exponential PWM duty curve acts as the primary generator overspeed control. When the generator speed exceeds the maximum generator speed threshold $\omega_{max}$ the PWM duty is set to 100% as a secondary overspeed control.

At TIME = 4 in FIG. 11, a transition to medium or high load with a high-leakage VNT system is shown. The VNT and bypass valve are opened at rates such that net air flow through both increases to meet engine airflow demand. The maximum opening limit of the VNT's nozzle mechanism is defined in accordance with turbine efficiency drop-off considerations. The bypass valve starts to open prior to the VNT reaching its maximum open limit, so as to create a smooth transition in air flow. The series throttle valve is simultaneously opened at a higher rate than net airflow so as not to create a significant pressure drop across it. The load control PWM duty is adjusted exponentially to achieve tailored power generation targets with respect to generator speed. The steepness of the exponential PWM duty curve acts as the primary generator overspeed control. When the generator speed exceeds the maximum generator speed threshold $\omega_{max}$ the PWM duty is set to 100% as a secondary overspeed control.

At TIME = 7 in FIG. 11, a wide-open-throttle (WOT) condition with a high-leakage VNT system is shown. The VNT is opened to its maximum open limit defined by turbine efficiency drop-off considerations. The bypass valve is opened sufficiently to meet WOT engine air flow demand. The series throttle valve is opened sufficiently so as not to create a significant pressure drop across it. Though little electrical power is expected, the load control PWM duty is still adjusted exponentially to achieve tailored power generation targets with respect to generator speed. The steepness of the exponential PWM duty curve acts as the primary generator overspeed control. Generator speed exceeding the maximum generator speed threshold causes the PWM duty to go to 100% as a secondary overspeed control. The PWM duty is set to zero if generator speed drops below the minimum speed threshold for electrical power production.

TLR System Activated: Low-Leakage VNT

The following is a summary of the valve and load control methodology used when the TLR system is active and uses a VNT mechanism with a closed air leakage rate low enough to adequately control engine idle speed.

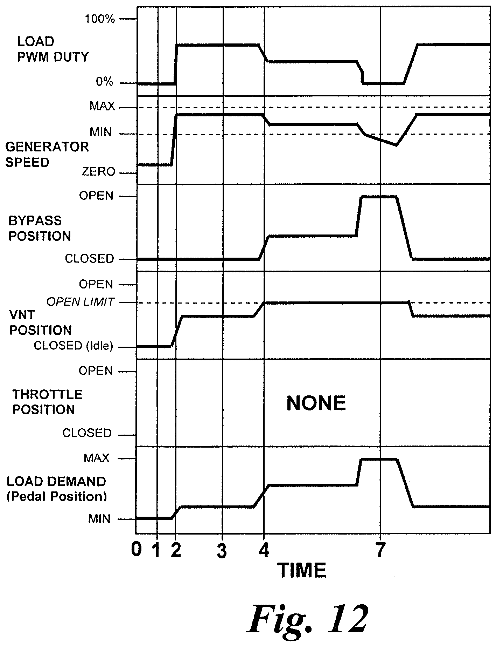

With reference to FIG. 12, the state of the TLR system at an engine idle condition (TIME = 1) is shown for a system with a low-leakage VNT such as shown in FIG. 3. Idle speed control is obtained by closing the VNT **210** to achieve the idle airflow setting. The bypass valve **260** is fully closed. The load control PWM duty is zero if generator speed is below the minimum speed threshold for electrical power production.

At TIME = 2 in FIG. 12, an off-idle transition with the low-leakage VNT system is shown. The VNT is opened at a rate such that air flow through it increases to meet engine air flow demand. The bypass valve remains fully closed. The load control PWM duty is zero until the minimum generator speed threshold for electrical power production is exceeded, then the PWM duty is increased exponentially to achieve tailored power generation targets with respect to generator speed. The steepness of the exponential PWM duty curve acts as the primary generator overspeed control. Generator speed exceeding the maximum generator speed threshold causes PWM duty to go to 100% as a secondary overspeed control.

At TIME = 3 in FIG. 12, a low load cruise with a low-leakage VNT system is shown. The VNT position is adjusted so air flow through it meets engine air flow demand. The bypass valve remains fully closed. The load control PWM duty is adjusted exponentially to achieve tailored power generation targets with respect to generator speed. The steepness of the exponential PWM duty curve acts as the primary generator overspeed control. Generator speed exceeding the maximum generator speed threshold causes PWM duty to go to 100% as a secondary overspeed control.

At TIME = 4 in FIG. 12, a transition to medium or high load with a low-leakage VNT system is shown. The VNT and bypass valve are opened at rates such that net air flow through both increases to meet engine airflow demand. The maximum opening limit of a swing-vane type VNT is defined by turbine efficiency drop-off considerations. The bypass valve starts to open prior to the VNT reaching maximum open limit so as to create a smooth transition in air flow. The load control PWM duty is adjusted exponentially to achieve tailored power generation targets with respect to generator speed. The steepness of the exponential PWM duty curve acts as the primary generator overspeed control. Generator speed exceeding the maximum generator speed threshold causes PWM duty to go to 100% as a secondary overspeed control.

At TIME = 7 in FIG. 12, a wide-open-throttle (WOT) condition with a low-leakage VNT system is shown. The swing-vane VNT is opened to its maximum open limit defined by turbine efficiency drop-off considerations. The bypass valve is opened sufficiently to meet WOT engine air flow demand. Though little electrical power is expected, the load control PWM duty is still adjusted exponentially to achieve tailored power generation targets with respect to generator speed. The steepness of the exponential PWM duty curve acts as the primary generator overspeed control. Generator speed exceeding the maximum generator speed threshold causes PWM duty to go to 100% as secondary overspeed control.

TLR System Activated: Free-Floating Turbine

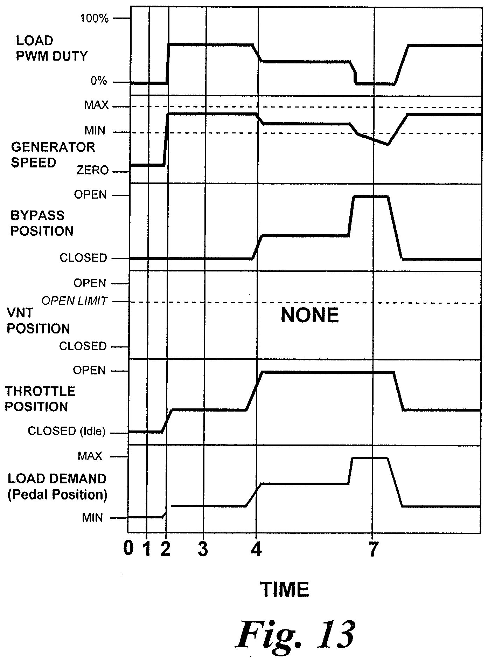

With reference to FIG. 13, the state of the TLR system at an engine idle condition (TIME = 1) is shown for a system with a free-floating turbine such as shown in FIGS. 4 and 5. Idle speed control is obtained by closing the series throttle valve **370** to achieve the required idle air flow setting. Typically there is sufficient air flow through the free-floating turbine to achieve a good idle characteristic without partially opening the bypass valve **360** to apply near atmospheric pressure in front of the throttle valve (on systems with a downstream series throttle), or near intake manifold vacuum behind the throttle valve (on systems with an upstream series throttle). The load control PWM duty is zero if generator speed is below the minimum speed threshold for electrical power production.

At TIME = 2 in FIG. 13, an off-idle transition with the free-floating turbine system is shown. The series throttle valve is opened at a rate such that air flow through it increases to meet engine airflow demand. The bypass valve is closed. The load control PWM duty is zero until the minimum generator speed threshold for electrical power production is exceeded, then PWM duty is increased exponentially to achieve tailored power generation targets with respect to generator speed. The steepness of the exponential PWM duty curve acts as the primary generator overspeed control. Generator speed exceeding the maximum generator speed threshold causes PWM duty to go to 100% as a secondary overspeed control.

At TIME = 3 in FIG. 13, a low load cruise condition with the free-floating turbine system is shown. The series throttle valve position is adjusted so air flow through it meets engine airflow demand. The bypass valve remains closed. The load control PWM duty is adjusted exponentially to achieve tailored power generation targets with respect to generator speed. The steepness of the exponential PWM duty curve acts as the primary generator overspeed control. Generator speed exceeding the maximum generator speed threshold causes PWM duty to go to 100% as a secondary overspeed control. While maintaining a desired engine air flow rate, the amount of electrical power generation can also be tailored by adjusting the relative opening of the series throttle valve and the bypass valve, which regulate turbine power. To increase turbine power, the series throttle valve opening is increased and the bypass valve opening is decreased to shift the expansion ratio to be across the bypass valve and turbine. To reduce turbine power, the series throttle valve opening is decreased and the bypass valve opening is increased to shift the expansion ratio to be across the throttle valve, instead of the turbine.

At TIME = 4 in FIG. 13, a transition to a medium or high load condition with a free-floating turbine system is shown. The series throttle valve and bypass valve are opened at rates such that net air flow through both increases to meet engine air flow demand. The bypass valve starts to open prior to the free-floating turbine reaching its choked flow limit so as to create a smooth transition in air flow. The load control PWM duty is adjusted exponentially to achieve tailored power generation targets with respect to generator speed. The steepness of the exponential PWM duty curve acts as the primary generator overspeed control. Generator speed exceeding the maximum generator speed threshold causes PWM duty to go to 100% as a secondary overspeed control. While maintaining a desired engine air flow rate, the amount of electrical power generation can also be tailored by adjusting the relative opening of the series throttle valve and the bypass valve, which regulate turbine power. To increase turbine power, the series throttle valve opening is increased and the bypass valve opening is decreased to shift the expansion ratio to be across the bypass valve and turbine. To reduce turbine power, the series throttle valve opening is decreased and the bypass valve opening is increased to shift the expansion ratio to be across the throttle valve, instead of the turbine.

At TIME = 7 in FIG. 13, a wide-open-throttle (WOT) condition with a free-floating turbine system is shown. The bypass valve is opened sufficiently to meet WOT engine air flow demand. The series throttle valve is opened sufficiently so as not to create a significant pressure drop across it. Though little electrical power is expected, load control PWM duty is still adjusted exponentially to achieve tailored power generation targets with respect to generator speed. The steepness of the exponential PWM duty curve acts as the primary generator overspeed control. Generator speed exceeding the maximum generator speed threshold causes PWM duty to go to 100% as a secondary overspeed control.

## Bypass Valve Control Algorithm for Improved Throttle Response

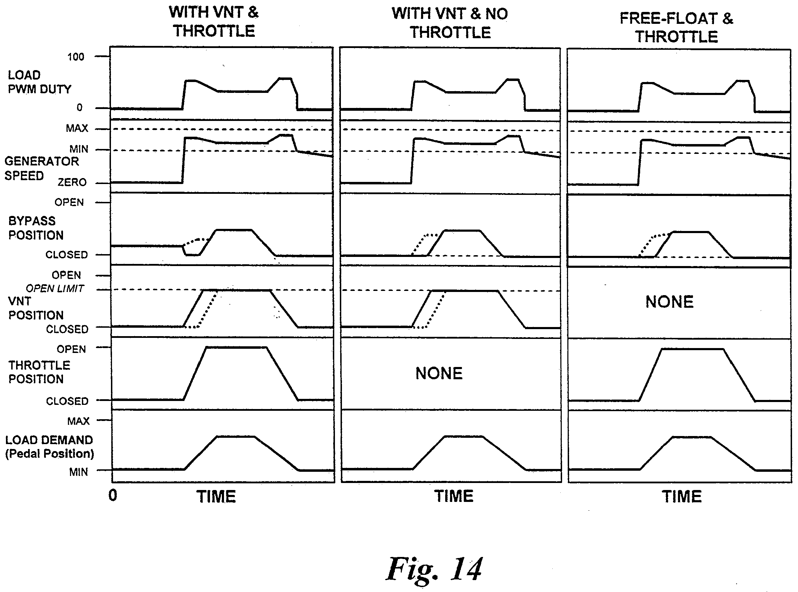

FIG. 14 illustrates a valve control algorithm that can be implemented specifically for positive-going (increasing load) engine airflow transitions that may provide improved throttle response in off-idle through mid-load operating modes, suitable for certain applications. This alternative algorithm consists first of partially opening the bypass valve quickly on positive-going engine air flow transitions (see the dotted lines) to achieve a quick air flow increase into the engine as demanded by the load demand signal (pedal position) and the position of the series throttle valve, if one is present. Next, as the rate of positive-going load demand slows, a transition is executed whereby the bypass valve closes to its normal position as the VNT opens or air flow through the free-floating turbine reaches steady-state. This algorithm can be applied to all TLR System configurations described within this disclosure.

## Algorithm for Improved Electrical Power Generation During "Fuel-Cut" Decelerations

An alternate valve control algorithm for improved electrical power generation can be implemented during decreasing air flow transitions where "fuel-cut" to the cylinders has been executed. This alternative algorithm, when triggered by the "fuel-cut" signal, consists of positioning the series throttle valve, VNT (if applicable), and bypass valve to certain optimized positions based on system characteristics for improved electrical power generation at the engine RPM condition present. Automatic transmissions, continuously variable transmissions (CVTs), and other advanced transmissions whose gear selection is electronically controlled may also be triggered to down-shift to a lower gear by this algorithm under certain conditions to increase engine RPM for improved electrical power production. The trade-off between the desired level of engine braking and electrical power production may be tailored within the algorithm by adjustment of the valve position-to-RPM and/or vehicle speed relationship. When the "fuel-cut" signal ceases, the valves first return to their normal positions based on Load Demand (pedal position) and then a signal is sent to the engine controller that it is safe to re-enable fueling. This algorithm can be applied to all TLR system configurations described within this disclosure.

## Overspeed Control Algorithm for Rapid Throttle-Lift

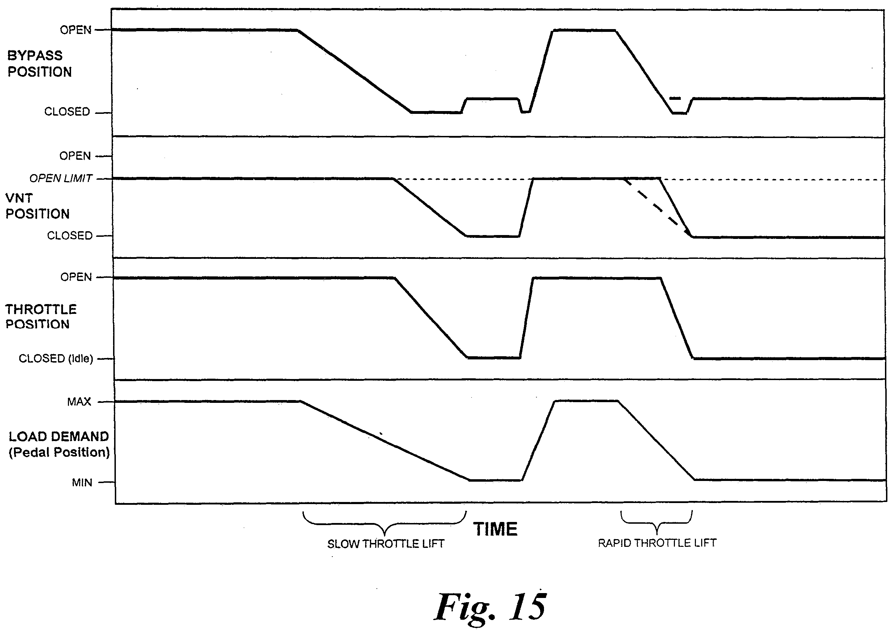

On TLR system configurations having a VNT turbine, an optional air valve-related generator overspeed control algorithm may be chosen to be executed during certain high-flow rapid throttle-lift conditions. This is illustrated in FIG. 15. To illustrate the technique, starting with the system operating at high flow near WOT, when a *slow* (i.e., at a rate lower than a predetermined rate) throttle-lift event occurs, the bypass valve begins closing first as it follows the decreasing load demand signal, followed next by closure of the VNT. However, when a high-flow *rapid* (i.e., at a rate higher than the predetermined rate) throttle-lift event occurs, the rapidly decreasing load demand signal triggers execution of the algorithm, forcing the VNT to begin closing much sooner (dashed lines) to prevent the bypass valve's air flow momentum from being forced through the VNT, possibly causing a turbine overspeed condition. Also, the bypass valve position near the idle flow setting is adjusted by the algorithm to ensure a smooth transition to idle.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

**Claims**

1. A throttle loss recovery (TLR) system for a spark-ignition internal combustion engine, comprising:

   an electrical generator;
   a radial-inflow turbine coupled to the generator and arranged to receive incoming air destined for an intake of the spark-ignition engine, the turbine recovering energy from the air passing therethrough and the turbine in turn rotatably driving the generator, wherein the turbine comprises a high-leakage variable nozzle turbine (VNT) that is controllable between a fully closed position and a fully open position and partially open positions therebetween;
   a bypass passage and an associated bypass valve arranged to allow air to bypass the VNT and be delivered directly to the air intake, the bypass valve being controllable to selectively vary a degree of opening of the bypass valve from closed to open and partially open positions therebetween;
   a throttle valve arranged upstream of and in series with the VNT and the bypass valve, the throttle valve being controllable to selectively vary a degree of opening of the throttle valve from closed to open and partially open positions therebetween; and
   a rectifier, a filter, and a pulse width modulation (PWM) controller between the generator and a load served by the generator such that AC electrical power generated by the generator is rectified and filtered into DC current and is supplied to the load via the PWM controller, wherein: the PWM controller is arranged such that:

      the electrical power generation zone is bounded on the low side by a minimum generator speed threshold $\omega_{min}$; and

the electrical power generation zone is bounded by a maximum generator speed threshold $\omega_{max}$ above which the PWM duty cycle is set to 100% to control generator overspeed excursions.

2. A throttle loss recovery (TLR) system for a spark-ignition internal combustion engine, comprising:

   an electrical generator;
   a radial-inflow turbine coupled to the generator and arranged to receive incoming air destined for an intake of the spark-ignition engine, the turbine recovering energy from the air passing therethrough and the turbine in turn rotatably driving the generator, wherein the turbine comprises a high-leakage variable nozzle turbine (VNT) that is controllable between a fully closed position and a fully open position and partially open positions therebetween;
   a bypass passage and an associated bypass valve arranged to allow air to bypass the VNT and be delivered directly to the air intake, the bypass valve being controllable to selectively vary a degree of opening of the bypass valve from closed to open and partially open positions therebetween;
   a throttle valve arranged downstream of and in series with the VNT and the bypass valve, wherein the throttle valve is located downstream of a juncture between the bypass passage and a discharge of the VNT, the throttle valve being controllable to selectively vary a degree of opening of the throttle valve from closed to open and partially open positions therebetween; and
   a rectifier, a filter, and a pulse width modulation (PWM) controller between the generator and a load served by the generator such that AC electrical power generated by the generator is rectified and filtered into DC current and is supplied to the load via the PWM controller, wherein: the PWM controller is arranged such that:

      the electrical power generation zone is bounded on the low side by a minimum generator speed threshold $\omega$min; and
      the electrical power generation zone is bounded by a maximum generator speed threshold $\omega$max above which the PWM duty cycle is set to 100% to control generator overspeed excursions.

3. A throttle loss recovery (TLR) system for a spark-ignition internal combustion engine, comprising:

   an electrical generator;
   a radial-inflow turbine coupled to the generator and arranged to receive incoming air destined for an intake of the spark-ignition engine, the turbine recovering energy from the air passing therethrough and the turbine in turn rotatably driving the generator, wherein the turbine comprises a low-leakage variable nozzle turbine (VNT) that is controllable between a fully closed position and a fully open position and partially open positions therebetween;

a bypass passage and an associated bypass valve arranged to allow air to bypass the VNT and be delivered directly to the air intake, the bypass valve being controllable to selectively vary a degree of opening of the bypass valve from closed to open and partially open positions therebetween; and

a rectifier, a filter, and a pulse width modulation (PWM) controller between the generator and a load served by the generator such that AC electrical power generated by the generator is rectified and filtered into DC current and is supplied to the load via the PWM controller, wherein:

the system is free of any additional throttle valve for throttling the air being delivered to the air intake of the engine, all throttling of the air being performed by at least one of the VNT and the bypass valve; and
the PWM controller is arranged such that:

the electrical power generation zone is bounded on the low side by a minimum generator speed threshold $\omega$min; and
the electrical power generation zone is bounded by a maximum generator speed threshold $\omega$max above which the PWM duty cycle is set to 100% to control generator overspeed excursions.

4. A throttle loss recovery (TLR) system for a spark-ignition internal combustion engine, comprising:

an electrical generator;
a radial-inflow turbine coupled to the generator and arranged to receive incoming air destined for an intake of the spark-ignition engine, the turbine recovering energy from the air passing therethrough and the turbine in turn rotatably driving the generator, wherein the turbine comprises a free-floating turbine;
a bypass passage and an associated bypass valve arranged to allow air to bypass the turbine and be delivered directly to the air intake, the bypass valve being controllable to selectively vary a degree of opening of the bypass valve from closed to open and partially open positions therebetween;
a throttle valve arranged upstream of and in series with the turbine and the bypass valve, the throttle valve being controllable to selectively vary a degree of opening of the throttle valve from closed to open and partially open positions therebetween; and
a rectifier, a filter, and a pulse width modulation (PWM) controller between the generator and a load served by the generator such that AC electrical power generated by the generator is rectified and filtered into DC current and is supplied to the load via the PWM controller, wherein:
the PWM controller is arranged such that:

the electrical power generation zone is bounded on the low side by a minimum generator speed threshold $\omega$min; and
the electrical power generation zone is bounded by a maximum generator speed threshold $\omega$max above which the PWM duty cycle is set to 100% to control generator overspeed excursions.

5. A throttle loss recovery (TLR) system for a spark-ignition internal combustion engine, comprising:

an electrical generator;
a radial-inflow turbine coupled to the generator and arranged to receive incoming air destined for an intake of the spark-ignition engine, the turbine recovering energy from the air passing therethrough and the turbine in turn rotatably driving the generator, wherein the turbine comprises free-floating turbine;
a bypass passage and an associated bypass valve arranged to allow air to bypass the turbine and be delivered directly to the air intake, the bypass valve being controllable to selectively vary a degree of opening of the bypass valve from closed to open and partially open positions therebetween;
a throttle valve arranged downstream of and in series with the turbine and the bypass valve, wherein the throttle valve is located downstream of a juncture between the bypass passage and a discharge of the turbine, the throttle valve being controllable to selectively vary a degree of opening of the throttle valve from closed to open and partially open positions therebetween; and
a rectifier, a filter, and a pulse width modulation (PWM) controller between the generator and a load served by the generator such that AC electrical power generated by the generator is rectified and filtered into DC current and is supplied to the load via the PWM controller, wherein:
the PWM controller is arranged such that:

the electrical power generation zone is bounded on the low side by a minimum generator speed threshold ωmin; and
the electrical power generation zone is bounded by a maximum generator speed threshold ωmax above which the PWM duty cycle is set to 100% to control generator overspeed excursions.

**Patentansprüche**

1. Drosselloses Energierückgewinnungs- (TLR-) System für eine fremdgezündete Verbrennungskraftmaschine, umfassend:

einen elektrischen Generator;
eine Turbine mit radialer Einströmung verbunden mit dem Generator und dafür ausgelegt, eintretende Luft bestimmt für einen Einlass des fremdgezündeten Motors aufzunehmen, wobei die Turbine Energie aus der sie durchströmenden Luft zurückgewinnt und die Turbine ihrerseits den Generator drehbar antreibt, wobei die Turbine eine Turbine mit variabler Düse (VNT) und hoher Leckage umfasst, die steuerbar ist zwischen einer vollständig geschlossenen Position und einer vollständig geöffneten Position sowie dazwischenliegenden teilweise geöffneten Positionen;
einen Umgehungsdurchgang (Bypass) und ein zugehöriges Umgehungsventil, die dafür ausgelegt sind, Luft zu ermöglichen, die VNT zu umgehen und dem Lufteinlass direkt zugeführt zu werden, wobei das Umgehungsventil steuerbar ist, um einen Öffnungsgrad des Umgehungsventils selektiv zu verändern von geschlossener zu geöffneter und dazwischenliegenden teilweise geöffneten Positionen;
ein Drosselventil, das stromaufwärts der und mit der VNT und dem Umgehungsventil in Reihe angeordnet ist, wobei das Drosselventil steuerbar ist, um einen Öffnungsgrad des Drosselventils selektiv zu verändern von geschlossener zu geöffneter und dazwischenliegenden teilweise geöffneten Positionen; und
einen Gleichrichter, ein Filter und eine Pulsweitenmodulations- (PWM-) Steuerung zwischen dem Generator und einer durch den Generator bedienten Last, sodass der durch den Generator erzeugte elektrische Wechselstrom zu Gleichstrom gleichgerichtet und gefiltert wird und über die PWM-Steuerung der Last zugeführt wird, wobei:
die PWM-Steuerung derart ausgelegt ist, dass:

die elektrische Stromerzeugungszone im unteren Bereich durch eine Mindestgenerator-Geschwindigkeitsschwelle $\omega_{min}$ begrenzt ist; und

die elektrische Stromerzeugungszone im oberen Bereich durch eine Maximalgenerator-Geschwindigkeitsschwelle $\omega_{max}$ begrenzt ist, über welcher die PWM-Einschaltdauer auf 100 % gesetzt wird, um Generatorgeschwindigkeitsüberschreitungen zu kontrollieren.

2. Drosselloses Energierückgewinnungs- (TLR-) System für eine fremdgezündete Verbrennungskraftmaschine, umfassend:

einen elektrischen Generator;
eine Turbine mit radialer Einströmung verbunden mit dem Generator und dafür ausgelegt, eintretende Luft bestimmt für einen Einlass des fremdgezündeten Motors aufzunehmen, wobei die Turbine Energie aus der sie durchströmenden Luft zurückgewinnt und die Turbine ihrerseits den Generator drehbar antreibt, wobei die Turbine eine Turbine mit variabler Düse (VNT) und hoher Leckage umfasst, die steuerbar ist zwischen einer vollständig geschlossenen Position und einer vollständig geöffneten Position sowie dazwischenliegenden teilweise geöffneten Positionen;
einen Umgehungsdurchgang und ein zugehöriges Umgehungsventil, die dafür ausgelegt sind, Luft zu ermöglichen, die VNT zu umgehen und dem Lufteinlass direkt zugeführt zu werden, wobei das Umgehungsventil steuerbar ist, um einen Öffnungsgrad des Umgehungsventils selektiv zu verändern von geschlossener zu geöffneter und dazwischenliegenden teilweise geöffneten Positionen;
ein Drosselventil, das stromabwärts der und mit der VNT und dem Umgehungsventil in Reihe angeordnet ist, wobei das Drosselventil stromabwärts einer Verbindungsstelle zwischen dem Umgehungsdurchgang und eines Austritts der VNT angeordnet ist, wobei das Drosselventil steuerbar ist, um einen Öffnungsgrad des Drosselventils selektiv zu verändern von geschlossener zu geöffneter und dazwischenliegenden teilweise geöffneten Positionen; und
einen Gleichrichter, ein Filter und eine Pulsweitenmodulations- (PWM-) Steuerung zwischen dem Generator und einer durch den Generator bedienten Last, sodass der durch den Generator erzeugte elektrische Wechselstrom zu Gleichstrom gleichgerichtet und gefiltert wird und über die PWM-Steuerung der Last zugeführt wird, wobei:
die PWM-Steuerung derart ausgelegt ist, dass:

die elektrische Stromerzeugungszone im unteren Bereich durch eine Mindestgenerator-Geschwindigkeitsschwelle $\omega_{min}$ be-

grenzt ist; und

die elektrische Stromerzeugungszone im oberen Bereich durch eine Maximalgenerator-Geschwindigkeitsschwelle $\omega_{max}$ begrenzt ist, über welcher die PWM-Einschaltdauer auf 100 % gesetzt wird, um Generatorgeschwindigkeitsüberschreitungen zu kontrollieren.

3. Drosselloses Energierückgewinnungs- (TLR-) System für eine fremdgezündete Verbrennungskraftmaschine, umfassend:

einen elektrischen Generator;
eine Turbine mit radialer Einströmung verbunden mit dem Generator und dafür ausgelegt, eintretende Luft bestimmt für einen Einlass des fremdgezündeten Motors aufzunehmen, wobei die Turbine Energie aus der sie durchströmenden Luft zurückgewinnt und die Turbine ihrerseits den Generator drehbar antreibt, wobei die Turbine eine Turbine mit variabler Düse (VNT) und niedriger Leckage umfasst, die steuerbar ist zwischen einer vollständig geschlossenen Position und einer vollständig geöffneten Position sowie dazwischenliegenden teilweise geöffneten Positionen;
einen Umgehungsdurchgang und ein zugehöriges Umgehungsventil, die dafür ausgelegt sind, Luft zu ermöglichen, die VNT zu umgehen und dem Lufteinlass direkt zugeführt zu werden, wobei das Umgehungsventil steuerbar ist, um einen Öffnungsgrad des Umgehungsventils selektiv zu verändern von geschlossener zu geöffneter und dazwischenliegenden teilweise geöffneten Positionen; und
einen Gleichrichter, ein Filter und eine Pulsweitenmodulations- (PWM-) Steuerung zwischen dem Generator und einer durch den Generator bedienten Last, sodass der durch den Generator erzeugte elektrische Wechselstrom zu Gleichstrom gleichgerichtet und gefiltert wird und über die PWM-Steuerung der Last zugeführt wird, wobei:

das System keinerlei zusätzliches Drosselventil zum Drosseln der dem Lufteinlass des Motors zugeführten Luft aufweist, und die gesamte Drosselung der Luft durch mindestens entweder die VNT und/oder das Umgehungsventil erfolgt; und
die PWM-Steuerung derart ausgelegt ist, dass:

die elektrische Stromerzeugungszone im unteren Bereich durch eine Mindestgenerator-Geschwindigkeitsschwelle $\omega_{min}$ begrenzt ist; und

die elektrische Stromerzeugungszone im oberen Bereich durch eine Maximalgenerator-Geschwindigkeitsschwelle $\omega_{max}$ begrenzt ist, über welcher die PWM-Einschaltdauer auf 100 % gesetzt wird, um Generatorgeschwindigkeitsüberschreitungen zu kontrollieren.

4. Drosselloses Energierückgewinnungs- (TLR-) System für eine fremdgezündete Verbrennungskraftmaschine, umfassend:

einen elektrischen Generator;
eine Turbine mit radialer Einströmung verbunden mit dem Generator und dafür ausgelegt, eintretende Luft bestimmt für einen Einlass des fremdgezündeten Motors aufzunehmen, wobei die Turbine Energie aus der sie durchströmenden Luft zurückgewinnt und die Turbine ihrerseits den Generator drehbar antreibt, wobei die Turbine eine freischwebende Turbine umfasst;
einen Umgehungsdurchgang und ein zugehöriges Umgehungsventil, die dafür ausgelegt sind, Luft zu ermöglichen, die Turbine zu umgehen und dem Lufteinlass direkt zugeführt zu werden, wobei das Umgehungsventil steuerbar ist, um einen Öffnungsgrad des Umgehungsventils selektiv zu verändern von geschlossener zu geöffneter und dazwischenliegenden teilweise geöffneten Positionen;
ein Drosselventil, das stromaufwärts der und mit der Turbine und dem Umgehungsventil in Reihe angeordnet ist, wobei das Drosselventil steuerbar ist, um einen Öffnungsgrad des Drosselventils selektiv zu verändern von geschlossener zu geöffneter und dazwischenliegenden teilweise geöffneten Positionen; und
einen Gleichrichter, ein Filter und eine Pulsweitenmodulations- (PWM-) Steuerung zwischen dem Generator und einer durch den Generator bedienten Last, sodass der durch den Generator erzeugte elektrische Wechselstrom zu Gleichstrom gleichgerichtet und gefiltert wird und über die PWM-Steuerung der Last zugeführt wird, wobei:
die PWM-Steuerung derart ausgelegt ist, dass:

die elektrische Stromerzeugungszone im unteren Bereich durch eine Mindestgenerator-Geschwindigkeitsschwelle $\omega_{min}$ begrenzt ist; und

die elektrische Stromerzeugungszone im oberen Bereich durch eine Maximalgenerator-Geschwindigkeitsschwelle $\omega_{max}$ begrenzt ist, über welcher die PWM-Einschaltdauer auf 100 % gesetzt wird, um Generatorgeschwindigkeitsüberschreitungen zu kontrollieren.

**5.** Drosselloses Energierückgewinnungs- (TLR-) System für eine fremdgezündete Verbrennungskraftmaschine, umfassend:

einen elektrischen Generator;
eine Turbine mit radialer Einströmung verbunden mit dem Generator und dafür ausgelegt, eintretende Luft bestimmt für einen Einlass des fremdgezündeten Motors aufzunehmen, wobei die Turbine Energie aus der sie durchströmenden Luft zurückgewinnt und die Turbine ihrerseits den Generator drehbar antreibt, wobei die Turbine eine freischwebende Turbine umfasst; einen Umgehungsdurchgang und ein zugehöriges Umgehungsventil, die dafür ausgelegt sind, Luft zu ermöglichen, die Turbine zu umgehen und dem Lufteinlass direkt zugeführt zu werden, wobei das Umgehungsventil steuerbar ist, um einen Öffnungsgrad des Umgehungsventils selektiv zu verändern von geschlossener zu geöffneter und dazwischenliegenden teilweise geöffneten Positionen; ein Drosselventil, das stromabwärts der und mit der Turbine und dem Umgehungsventil in Reihe angeordnet ist, wobei das Drosselventil stromabwärts einer Verbindungsstelle zwischen dem Umgehungsdurchgang und eines Austritts der Turbine angeordnet ist, wobei das Drosselventil steuerbar ist, um einen Öffnungsgrad des Drosselventils selektiv zu verändern von geschlossener zu geöffneter und dazwischenliegenden teilweise geöffneten Positionen; und einen Gleichrichter, ein Filter und eine Pulsweitenmodulations- (PWM-) Steuerung zwischen dem Generator und einer durch den Generator bedienten Last, sodass der durch den Generator erzeugte elektrische Wechselstrom zu Gleichstrom gleichgerichtet und gefiltert wird und über die PWM-Steuerung der Last zugeführt wird, wobei:
die PWM-Steuerung derart ausgelegt ist, dass:

die elektrische Stromerzeugungszone im unteren Bereich durch eine Mindestgenerator-Geschwindigkeitsschwelle $\omega_{min}$ begrenzt ist; und
die elektrische Stromerzeugungszone im oberen Bereich durch eine Maximalgenerator-Geschwindigkeitsschwelle $\omega_{max}$ begrenzt ist, über welcher die PWM-Einschaltdauer auf 100 % gesetzt wird, um Generatorgeschwindigkeitsüberschreitungen zu kontrollieren.

## Revendications

**1.** Système de récupération de pertes d'énergie dues au papillon des gaz (TLR) pour un moteur à combustion interne à allumage par étincelles, comprenant :

un générateur électrique ;
une turbine à admission radiale couplée au générateur et conçue pour recevoir de l'air entrant destiné à une admission du moteur à allumage par étincelles, la turbine récupérant de l'énergie à partir de l'air passant à travers cette dernière et la turbine entraînant, à son tour, en rotation le générateur, dans lequel la turbine comprend une turbine à tuyère variable (VNT) à forte fuite qui peut être commandée entre une position complètement fermée et une position complètement ouverte et des positions partiellement ouvertes entre ces dernières ;
un passage de dérivation et un clapet de dérivation associé conçus pour permettre à l'air de contourner la turbine VNT et d'être fourni directement à l'admission d'air, le clapet de dérivation pouvant être commandé pour faire varier de manière sélective un degré d'ouverture du clapet de dérivation d'une position fermée à une position ouverte et à des positions partiellement ouvertes entre ces dernières ;
un papillon des gaz disposé en amont de la turbine VNT et du clapet de dérivation et en série avec ces derniers, le papillon des gaz pouvant être commandé pour faire varier de manière sélective un degré d'ouverture du papillon des gaz d'une position fermée à une position ouverte et à des positions partiellement ouvertes entre ces dernières ; et
un redresseur, un filtre et un dispositif de commande de modulation d'impulsions en durée (PWM) entre le générateur et une charge desservie par le générateur de telle sorte que de l'énergie électrique en courant alternatif (CA) produite par le générateur soit redressée et filtrée en courant continu (CC) et soit fournie à la charge par le biais du dispositif de commande de modulation PWM, dans lequel :
le dispositif de commande de modulation PWM est conçu de telle sorte que :

la zone de production d'énergie électrique soit limitée sur le côté inférieur par un seuil de vitesse de générateur minimal ($\omega_{min}$) ; et
la zone de production d'énergie électrique soit limitée par un seuil de vitesse de générateur maximal ($\omega_{max}$) au-dessus duquel le cycle de service de modulation PWM est fixé à 100 % pour commander des incursions en survitesse de générateur.

**2.** Système de récupération de pertes d'énergie dues au papillon des gaz (TLR) pour un moteur à combustion interne à allumage par étincelles, comprenant :

un générateur électrique ;

une turbine à admission radiale couplée au générateur et conçue pour recevoir de l'air entrant destiné à une admission du moteur à allumage par étincelles, la turbine récupérant de l'énergie à partir de l'air passant à travers cette dernière et la turbine entraînant, à son tour, en rotation le générateur, dans lequel la turbine comprend une turbine à tuyère variable (VNT) à forte fuite qui peut être commandée entre une position complètement fermée et une position complètement ouverte et des positions partiellement ouvertes entre ces dernières ;

un passage de dérivation et un clapet de dérivation associé conçus pour permettre à l'air de contourner la turbine VNT et d'être fourni directement à l'admission d'air, le clapet de dérivation pouvant être commandé pour faire varier de manière sélective un degré d'ouverture du clapet de dérivation d'une position fermée à une position ouverte et à des positions partiellement ouvertes entre ces dernières ;

un papillon des gaz disposé en aval de la turbine VNT et du clapet de dérivation et en série avec ces derniers, le papillon des gaz étant situé en aval d'une jointure entre le passage de dérivation et un refoulement de la turbine VNT, le papillon des gaz pouvant être commandé pour faire varier de manière sélective un degré d'ouverture du papillon des gaz d'une position fermée à une position ouverte et à des positions partiellement ouvertes entre ces dernières ; et

un redresseur, un filtre et un dispositif de commande de modulation d'impulsions en durée (PWM) entre le générateur et une charge desservie par le générateur de telle sorte que de l'énergie électrique en courant alternatif (CA) produite par le générateur soit redressée et filtrée en courant continu (CC) et soit fournie à la charge par le biais du dispositif de commande de modulation PWM, dans lequel : le dispositif de commande de modulation PWM est conçu de telle sorte que :

la zone de production d'énergie électrique soit limitée sur le côté inférieur par un seuil de vitesse de générateur minimal ($\omega$min) ; et

la zone de production d'énergie électrique soit limitée par un seuil de vitesse de générateur maximal ($\omega$max) au-dessus duquel le cycle de service de modulation PWM est fixé à 100 % pour commander des incursions en survitesse de générateur.

3. Système de récupération de pertes d'énergie dues au papillon des gaz (TLR) pour un moteur à combustion interne à allumage par étincelles, comprenant :

un générateur électrique ;

une turbine à admission radiale couplée au générateur et conçue pour recevoir de l'air entrant destiné à une admission du moteur à allumage par étincelles, la turbine récupérant de l'énergie à partir de l'air passant à travers cette dernière et la turbine entraînant, à son tour, en rotation le générateur, dans lequel la turbine comprend une turbine à tuyère variable (VNT) à faible fuite qui peut être commandée entre une position complètement fermée et une position complètement ouverte et des positions partiellement ouvertes entre ces dernières ;

un passage de dérivation et un clapet de dérivation associé conçus pour permettre à l'air de contourner la turbine VNT et d'être fourni directement à l'admission d'air, le clapet de dérivation pouvant être commandé pour faire varier de manière sélective un degré d'ouverture du clapet de dérivation d'une position fermée à une position ouverte et à des positions partiellement ouvertes entre ces dernières ; et

un redresseur, un filtre et un dispositif de commande de modulation d'impulsions en durée (PWM) entre le générateur et une charge desservie par le générateur de telle sorte que de l'énergie électrique en courant alternatif (CA) produite par le générateur soit redressée et filtrée en courant continu (CC) et soit fournie à la charge par le biais du dispositif de commande de modulation PWM, dans lequel :

le système est dépourvu de tout papillon des gaz supplémentaire pour étrangler l'air qui est fourni à l'admission d'air du moteur, tout l'étranglement de l'air étant réalisé par la turbine VNT et/ou le clapet de dérivation ; et

le dispositif de commande de modulation PWM est conçu de telle sorte que :

la zone de production d'énergie électrique soit limitée sur le côté inférieur par un seuil de vitesse de générateur minimal ($\omega$min) ; et

la zone de production d'énergie électrique soit limitée par un seuil de vitesse de générateur maximal ($\omega$max) au-dessus duquel le cycle de service de modulation PWM est fixé à 100 % pour commander des incursions en survitesse de générateur.

**4.** Système de récupération de pertes d'énergie dues au papillon des gaz (TLR) pour un moteur à combustion interne à allumage par étincelles, comprenant :

un générateur électrique ;

une turbine à admission radiale couplée au générateur et conçue pour recevoir de l'air entrant destiné à une admission du moteur à allumage par étincelles, la turbine récupérant de l'énergie à partir de l'air passant à travers cette dernière et la turbine entraînant, à son tour, en rotation le générateur, dans lequel la turbine comprend une turbine à flottement libre ;

un passage de dérivation et un clapet de dérivation associé conçus pour permettre à l'air de contourner la turbine et d'être fourni directement à l'admission d'air, le clapet de dérivation pouvant être commandé pour faire varier de manière sélective un degré d'ouverture du clapet de dérivation d'une position fermée à une position ouverte et à des positions partiellement ouvertes entre ces dernières ;

un papillon des gaz disposé en amont de la turbine et du clapet de dérivation et en série avec ces derniers, le papillon des gaz pouvant être commandé pour faire varier de manière sélective un degré d'ouverture du papillon des gaz d'une position fermée à une position ouverte et à des positions partiellement ouvertes entre ces dernières ; et

un redresseur, un filtre et un dispositif de commande de modulation d'impulsions en durée (PWM) entre le générateur et une charge desservie par le générateur de telle sorte que de l'énergie électrique en courant alternatif (CA) produite par le générateur soit redressée et filtrée en courant continu (CC) et soit fournie à la charge par le biais du dispositif de commande de modulation PWM, dans lequel :

le dispositif de commande de modulation PWM est conçu de telle sorte que :

la zone de production d'énergie électrique soit limitée sur le côté inférieur par un seuil de vitesse de générateur minimal ($\omega$min) ; et

la zone de production d'énergie électrique soit limitée par un seuil de vitesse de générateur maximal ($\omega$max) au-dessus duquel le cycle de service de modulation PWM est fixé à 100 % pour commander des incursions en survitesse de générateur.

**5.** Système de récupération de pertes d'énergie dues au papillon des gaz (TLR) pour un moteur à combustion interne à allumage par étincelles, comprenant :

un générateur électrique ;

une turbine à admission radiale couplée au générateur et conçue pour recevoir de l'air entrant destiné à une admission du moteur à allumage par étincelles, la turbine récupérant de l'énergie à partir de l'air passant à travers cette dernière et la turbine entraînant, à son tour, en rotation le générateur, dans lequel la turbine comprend une turbine à flottement libre ;

un passage de dérivation et un clapet de dérivation associé conçus pour permettre à l'air de contourner la turbine et d'être fourni directement à l'admission d'air, le clapet de dérivation pouvant être commandé pour faire varier de manière sélective un degré d'ouverture du clapet de dérivation d'une position fermée à une position ouverte et à des positions partiellement ouvertes entre ces dernières ;

un papillon des gaz disposé en aval de la turbine et du clapet de dérivation et en série avec ces derniers, dans lequel le papillon des gaz est situé en aval d'une jointure entre le passage de dérivation et un refoulement de la turbine, le papillon des gaz pouvant être commandé pour faire varier de manière sélective un degré d'ouverture du papillon des gaz d'une position fermée à une position ouverte et à des positions partiellement ouvertes entre ces dernières ; et

un redresseur, un filtre et un dispositif de commande de modulation d'impulsions en durée (PWM) entre le générateur et une charge desservie par le générateur de telle sorte que de l'énergie électrique en courant alternatif (CA) produite par le générateur soit redressée et filtrée en courant continu (CC) et soit fournie à la charge par le biais du dispositif de commande de modulation PWM, dans lequel :

le dispositif de commande de modulation PWM est conçu de telle sorte que :

la zone de production d'énergie électrique soit limitée sur le côté inférieur par un seuil de vitesse de générateur minimal ($\omega$min) ; et

la zone de production d'énergie électrique soit limitée par un seuil de vitesse de générateur maximal ($\omega$max) au-dessus duquel le cycle de service de modulation PWM est fixé à 100 % pour commander des incursions en survitesse de générateur.

**Fig. 1**

**Fig. 2**

**Fig. 3**

**Fig. 4**

**Fig. 5**

**Fig. 6**

**Fig. 7**

*Fig. 8*

*Fig. 9*

**Fig. 10**

**Fig. 11**

*Fig. 12*

TIME

*Fig. 13*

Fig. 14

*Fig. 15*

EP 2 580 442 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5394848 A
- EP 1462629 A1
- EP 2083154 A1
- WO 9604487 A1